(19) Europäisches Patentamt
European Patent Office
Office européen des brevets

(11) EP 0 723 321 A1

(12) **EUROPEAN PATENT APPLICATION**
published in accordance with Art. 158(3) EPC

(43) Date of publication:
24.07.1996 Bulletin 1996/30

(51) Int. Cl.$^6$: **H01S 3/101**

(21) Application number: 95921974.2

(86) International application number:
PCT/JP95/01199

(22) Date of filing: 15.06.1995

(87) International publication number:
WO 96/05638 (22.02.1996 Gazette 1996/09)

(84) Designated Contracting States:
DE GB IT

(30) Priority: 10.08.1994 JP 188586/94

(71) Applicant: FANUC LTD.
Minamitsuru-gun, Yamanashi 401-05 (JP)

(72) Inventor: EGAWA, Akira
Shizuoka 412 (JP)

(74) Representative: Jackson, Peter Arthur
GILL JENNINGS & EVERY
Broadgate House
7 Eldon Street
London EC2M 7LH (GB)

(54) **LASER OSCILLATOR**

(57) A laser oscillator which is capable of preventing damage caused by light reflected from a workpiece and a decrease in productivity resulting therefrom. Between a rear mirror (2) and an output mirror (4) within the laser oscillator is arranged a bending mirror (3). The bending mirror (3) has a coating formed on the surface thereof, which reflects S-polarized light sufficiently but has a low reflectance with respect to P-polarized light. A laser beam (1) is amplified between the rear mirror (2) and the output mirror (4), and emitted out through the output mirror (4). The laser beam (1) output at this time is formed by an S-polarized light (la). The S-polarized light (1a) is converted to a circularly polarized light by a zero-shifting mirror (5) and a quarter wavelength mirror (6). The laser beam (1) converted to the circularly-polarized light turns in a perpendicular direction at a mirror (7) and is converged onto a workpiece (9) by a condenser lens (8). Part of the laser beam 1 irradiated onto the workpiece (9) is reflected therefrom and returns along the same path that the laser beam (1) has been emitted therethrough. This reflected light input via the output mirror (4) is formed by a P-polarized light (1b). The P-polarized light (1b) received back into the laser oscillator is attenuated when reflected from the bending mirror (3).

FIG. 1

**Description**

Technical Field

This invention relates to a laser oscillator for outputting a laser beam by applying excitation potential thereto, and more particularly, to a laser oscillator having at least one bending mirror.

Background Art

Laser beam machining is a method of vaporizing or melting a workpiece by irradiating onto very small portions of the same a high-density-energy laser beam which is obtained by generating an extremely coherent, monochromatic light and then converging the light by a condenser lens. The laser beam is excellent in controllability, which enables the laser beam machining to be employed in cutting complicated shapes, very small articles with high accuracy, and so forth, under the control of a numerical control unit.

A laser beam machine for carrying out such laser beam machining suffers from a significant problem to be solved, i.e. a problem of dealing with light reflected from a workpiece. This problem is very serious especially in cutting or welding highly reflecting materials, such as aluminum and copper. Another problem is marks made by the reflected light when the machining head is moved with the shutter open for high-speed machining.

A low-loss optical resonator is formed between the workpiece and the rear mirror within a laser oscillator, which instantly amplifies the laser power of the light reflected back from the workpiece into the laser oscillator, to an extremely high level. Consequently, various kinds of mirrors arranged within the laser oscillator are damaged, which degrades the reliability of the laser beam machine.

There are two conventional methods of preventing such damage of reflecting mirrors caused by reflected light.

A first method controls input electric power such that the laser power in the laser oscillator is kept at a constant level through a fast power feedback.

A second method detects the reflected light outside the laser oscillator and interrupts the laser oscillation when the reflected light is detected in a large quantity.

Whichever of the above methods may be employed, it is required to interrupt machining when the reflected light arises. In the first method, while the total laser power inside the laser oscillator is kept at a constant level, the power of the laser beam generated by the oscillator itself is reduced by the quantity of the reflected light. A laser beam suitably used for machining is one generated by the oscillator itself. Therefore, a decrease in the power of this laser beam leads to changes in machining conditions. To avoid the changes, it is required to interrupt machining. The second method, which stops laser oscillation, necessarily interrupts machining as well.

Furthermore, both the above methods require a very expensive laser detector. And even if such a high-priced laser detector is used, it is impossible to prevent marks from being made by faint reflected light.

Disclosure of the Invention

The present invention has been made in view of these circumstances, and the object thereof is to provide a laser beam machine which is capable of preventing the light reflected from a workpiece from causing damage to its laser oscillator, and decreasing productivity.

To achieve the above object, the present invention provides a laser oscillator for outputting a laser beam, comprising at least one bending mirror having a high reflectance with respect to S-polarized light and a reflectance with respect to P-polarized light which is low enough to prevent the P-polarized light from being amplified.

The laser beam emitted from the laser oscillator is formed by an S-polarized light which the bending mirror reflects sufficiently. This laser beam is converted to a circularly polarized light and irradiated onto a workpiece. The light reflected from the workpiece returns into the laser oscillator in the form of P-polarized light which has a plane of polarization inclined at an angle of 90 ° to that of the S-polarized light. Since the bending mirror within the laser oscillator has a low reflectance with respect to P-polarized light, the P-polarized light is prevented from being amplified within the later oscillator.

This prevents the light reflected from the workpiece from causing damage to the reflecting mirrors of various kinds within the laser oscillator, and dispenses with interruption of machining. Therefore, it is possible to maintain the high reliability and productivity of the laser beam machine.

Brief Description of the Drawings

FIG. 1 is a diagram illustrating the optical system of a laser beam machine according to a first embodiment of the invention; and

FIG. 2 is a diagram illustrating the optical system of a laser oscillator according to a second embodiment of the invention.

Best Mode of Carrying Out the Invention

Embodiments of the present invention will now be described with reference to the drawings.

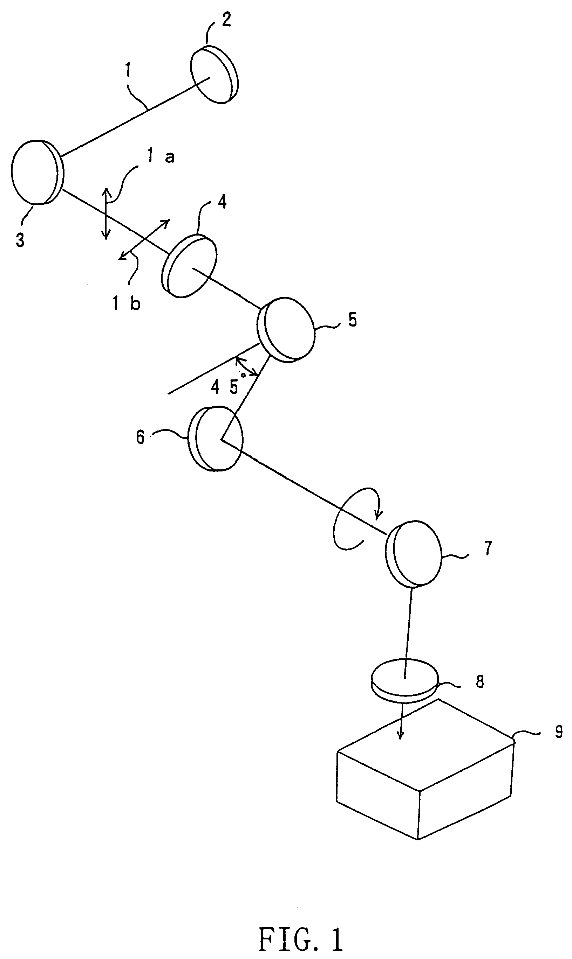

FIG. 1 is a diagram illustrating the optical system of a laser beam machine according to a first embodiment of the invention. Between a rear mirror 2 and an output mirror 4 is arranged a bending mirror 3. The bending mirror 4 has a coating formed on the surface thereof, which reflects almost 100% of S-polarized light but has a low reflectance with respect to P-polarized light. A laser beam 1 is amplified between the rear mirror 2 and the output mirror 4, and the intensified laser beam is emitted out through the output mirror 4. The laser beam 1 output at this time is formed by an S-polarized light. The S-polarized light 1a is a linearly polarized light which has a plane of polarization perpendicular to a plane (plane of incidence) containing the incident light and reflected light of the laser beam reflected at the bending mirror 3.

The S-polarized light 1a is converted to a circularly polarized light by a zero-shifting mirror 5 and a quarter wavelength mirror 6. The laser beam 1 converted to the circularly polarized light turns in a perpendicular direction at a mirror 7 and is converged onto a workpiece 9 by a condenser lens 8.

Part of the laser beam 1 irradiated onto the workpiece 9 is reflected therefrom and returns along the same path that the laser beam 1 has been emitted therethrough. The reflected light input via the output mirror 4 is formed by a P-polarized light lb. The P-polarized light 1b is a linearly polarized light having a plane of polarization inclined at an angle of 90 ° to that of the S-polarized light 1a.

The principle of conversion of the laser beam 1 from the S-polarized light, which is emitted, to the P-polarized light, which is received, will now be described. The laser beam in the propagation path is represented as a vector defined by components in a V-direction and an H-direction. The H-direction means a direction parallel to the optical axis of a circularly polarized light-forming block formed by the zero-shifting mirror 5 and the quarter wavelength mirror 6, and the V-direction means a direction perpendicular to the H-direction. It should be noted that the zero-shifting mirror 5, the mirror 7 and the condenser lens 8 have the same effects on both the emitted light and the reflected light received from the workpiece. Therefore, ignorance of these optical parts does not affect the conclusion.

The emitted light is expressed by the following formula:

$$Ei\ell = \begin{pmatrix} Ei\ell H \\ Ei\ell V \end{pmatrix} = Ei \begin{pmatrix} \sin\omega t \\ \sin\omega t \end{pmatrix} \qquad (1)$$

When the emitted light is reflected from the quarter wavelength mirror 6, the phase of the S-polarized light component is delayed by $\pi/2$. Accordingly, the light reflected therefrom is expressed by the following formula:

$$Eic = Ei \begin{pmatrix} \sin\omega t \\ \sin(\omega t - \pi/2) \end{pmatrix} = Ei \begin{pmatrix} \sin\omega t \\ -\cos\omega t \end{pmatrix} \qquad (2)$$

This formula indicates a vector wherein the direction of polarization rotates in the angular frequency of $\omega$. When this light is reflected from the workpiece 9, the phase of each component changes by 180°, and it is expressed as follows:

$$Erc = Ei \begin{pmatrix} -\sin\omega t \\ \cos\omega t \end{pmatrix} \qquad (3)$$

Further, the light reflected from the quarter wavelength mirror 6 is expressed by the following formula:

$$Er\ell = Ei \begin{pmatrix} -\sin\omega t \\ \cos(\omega t - \pi/2) \end{pmatrix} = Ei \begin{pmatrix} -\sin\omega t \\ \sin\omega t \end{pmatrix} \qquad (4)$$

It is clearly understood from the formula (4) that the reflected light is a light polarized in a direction perpendicular to the light represented by the formula (1), which means that the reflected light is a P-polarized light.

This P-polarized light received back into the laser oscillator is attenuated when reflected from the bending mirror 3. This prevents the reflected light, i.e. the P-polarized light from being amplified, even if a large quantity of energy is input to the laser oscillator. In short, the light reflected from the workpiece 9 can never be amplified inside the laser oscillator.

The bending mirror 3, which, as described above, reflects the S-polarized light efficiently, but has a low reflectance with respect to P-polarized light, can be produced by adjusting the layer, thickness and material of the coating provided thereon.

Next, the suitable reflectance with respect to P-polarized light of the bending mirror(s) in a laser oscillator having at least one bending mirror will be described. In the following description, the reflectance of a bending mirror with respect to P-polarized light is represented by R, the amplification factor of the laser oscillator by m, and the number of bending mirrors by n. Assuming that the reflectance with respect to S-polarized light is 1 (100%), in order to prevent the P-polarized light from being amplified, the following formula (5) must be satisfied:

$$mR^{2n} < 1 \qquad (5)$$

When this formula (5) is solved for R, the following formula (6) is obtained:

$$R < (1/m)^{1/2n} \qquad (6)$$

When this formula (6) is applied to the laser oscillator described hereinabove with reference to FIG. 1 which has one bending mirror and of which the amplification factor is 6, the reflectance $R_1$ of the bending mirror with respect to P-polarized light is as follows:

$$R_1 < 0.408 \qquad (7)$$

Since the reflectance with respect to S-polarized light is 1 (100%), a suitable reflectance of the bending mirror with respect to the P-polarized light is below 40% of the reflectance with respect to the S-polarized light. That is, with the laser oscillator having only one bending mirror, it is possible to prevent the P-polarized light from being amplified by setting the reflectance of the bending mirror with respect to P-polarized light to a value of 40% or less.

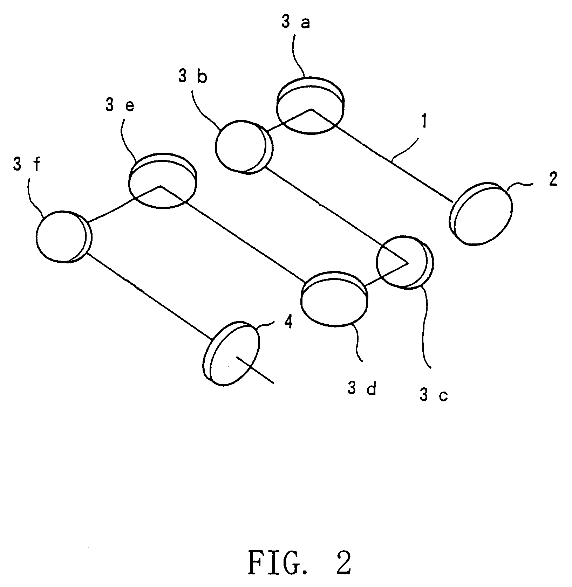

FIG. 2 is a diagram illustrating the optical system of a laser oscillator according to a second embodiment of the invention. This oscillator has six bending mirrors 3a to 3f arranged between the rear mirror 2 and the output mirror 4. The reflectance $R_2$ of the bending mirrors 3a to 3f with respect to P-polarized light for preventing the amplification of the P-polarized light within the laser oscillator, which is obtained by the use of the formula (6), is as follows:

$$R_2 < 0.861 \qquad (8)$$

That is, in the laser oscillator having six bending mirrors, the amplification of the P-polarized light can be prevented by holding the reflectance of each bending mirror with respect to P-polarized light at 86% or less.

Thus, by setting the reflectance R of the bending mirrors with respect to P-polarized light to such a value as will satisfy the formula (6), it is possible to prevent the P-polarized light reflected from the workpiece from being amplified within the laser oscillator. This prevents the light reflected from the workpiece from causing damage to various kinds of mirrors, and hence the high reliability of the laser beam machine can be maintained. Furthermore, the arrangement of such a laser oscillator remains simple and bending mirrors employed are very inexpensive, which enables the whole machine to be produced at a low manufacturing cost.

Further, since the reflected light from the workpiece is prevented from being amplified within the laser oscillator, there is no need to interrupt machining, which leads to a marked increase in the yield of products or acceptably-machined workpieces and hence improvement in productivity.

As described above, according to the present invention, the amplification of the P-polarized light can be prevented by setting the reflectance of at least one bending mirror with respect to P-polarized light to a value lower than the reflectance of the same with respect to S-polarized light, which makes it possible to prevent the light reflected from a workpiece from being amplified within the laser oscillator.

**Claims**

1. A laser oscillator for outputting a laser beam, comprising at least one bending mirror having a high reflectance with respect to S-polarized light and a reflectance with respect to P-polarized light which is low enough to prevent the P-polarized light from being amplified.

2. A laser oscillator according to claim 1, wherein the reflectance R of said bending mirror with respect to the P-polarized light satisfies the following formula, provided that the reflectance of said bending mirror with respect to the S-polarized light is 1, the amplification factor of a laser beam is m, and the number of said bending mirror is n:

$$R < (1/m)^{1/2n}$$

3. A laser oscillator according to claim 1, wherein the reflectance of said bending mirror with respect to the P-polarized light is 86% or less when the amplification factor of the laser beam is 6 and the number of said bending mirror is 6.

4. The laser oscillator according to claim 1, wherein the reflectance of said bending mirror with respect to P-polarized light is equal to 40% or less when the amplification factor of the laser beam is 6 and the number of said bending mirror is 1.

FIG. 1

FIG. 2

## INTERNATIONAL SEARCH REPORT

| | International application No. |
|---|---|
| | PCT/JP95/01199 |

**A. CLASSIFICATION OF SUBJECT MATTER**

Int. Cl$^6$ H01S3/101

According to International Patent Classification (IPC) or to both national classification and IPC

**B. FIELDS SEARCHED**

Minimum documentation searched (classification system followed by classification symbols)

Int. Cl$^6$ H01S3/00-3/30

Documentation searched other than minimum documentation to the extent that such documents are included in the fields searched

Jitsuyo Shinan Koho     1926 - 1993
Kokai Jitsuyo Shinan Koho   1971 - 1993

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 61-10291, A (Toshiba Corp.), January 17, 1986 (17. 01. 86), Figs. 1, 2 (Family: none) | 1 - 4 |
| A | JP, 1-317696, A (Toshiba Corp.), December 22, 1989 (22. 12. 89), Figs. 4, 6 (Family: none) | 1 - 4 |
| Y | JP, 5-275778, A (Amada Co., Ltd.), October 22, 1993 (22. 10. 93), Fig. 1 (Family: none) | 1 - 4 |
| Y | JP, 6-140697, A (Fanuc Ltd.), June 20, 1994 (20. 06. 94), Figs. 1 to 6 & EP, 623979, A1 & WO, 94/10727, A1 | 1 - 4 |

☐ Further documents are listed in the continuation of Box C.    ☐ See patent family annex.

*   Special categories of cited documents:
"A"   document defining the general state of the art which is not considered to be of particular relevance
"E"   earlier document but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| July 3, 1995 (03. 07. 95) | August 1, 1995 (01. 08. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)